# EUROPEAN PATENT SPECIFICATION

(11) **EP 3 677 363 B1**
(45) Date of publication and mention of the grant of the patent: **07.12.2022**
(21) Application number: 20150587.2
(22) Date of filing: 07.01.2020
(51) Int. Cl.: B33Y 10/00, B22F 3/24, B22F 5/00, B22F 10/10, B22F 10/20, B22F 10/40, B29C 64/245, B33Y 40/20, B33Y 80/00

(54) **SUPPORT FRAME**
STÜTZRAHMEN
CADRE DE SUPPORT

(30) Priority: 07.01.2019 US 201962789152 P
(43) Date of publication of application: 08.07.2020
(73) Proprietor: Howmedica Osteonics Corp., Mahwah, NJ 07430 (US)
(72) Inventor: HEARNE, Tommy, Hugginstown, Co. Kilkenny (IE); KENNY, Mark, Loughrea, Co. Galway (IE); ROBINSON, Joseph, Ridgewood, NJ 07450 (US); WESTNOTT, Kevin, Enniscorthy, Co. Wexford (IE)
(74) Representative: Regimbeau

(56) References cited:
- EP-A1- 2 022 622
- WO-A1-2018/151720
- US-A1- 2012 018 926

## Description

### CROSS-REFERENCE TO RELATED APPLICATIONS

The present application claims the benefit of, and priority to, U.S. Provisional Patent Application Serial No. 62/789,152, filed on January 7, 2019.

### BACKGROUND OF THE INVENTION

Additive manufacturing is a type of 3D printing where products are fabricated with custom geometries by means of sequentially adding layers of material. One form of additive manufacturing is powder bed additive manufacturing ("PBAM"). During this process, a computer-controlled laser is directed into a layer of powder at pre-defined and specific points, forming a solid material at those points. A new layer of powder is then swept over the previous layer and the process is repeated until completion. Once the process is finished, the surrounding powder is removed, usually by vacuum or pressurized air, leaving the underlying products. The finished products are then individually and manually removed by an operator at which point they can be further processed, if necessary.

PBAM provides several advantages over other types of 3D printing involving the use of a build platen, such as larger batch quantities, reduced build time, and reduced scrap. However, when the batch quantity becomes sufficiently large, individual handling of parts may become too difficult and unwieldy, especially where the batch involves a wide variety of different parts and custom geometries. For instance, the lack of product uniformity in the batch may increase the complexity and time taken to process the batch. Additionally, the risk of damage to the individual parts is increased from the operator de-powdering and handling the product for post-processing. All of this increases the inefficiencies in the build process.

Moreover, during PBAM, the surrounding powder may provide structural support to the products as they are being manufactured. However, once the manufacturing is completed, and the excess powder is removed, the finished products may lack sufficient support. This can result in destabilization of the build and/or damage to the individual products. While external supports may be attached to the build plate during manufacturing, this can drastically increase the cost and complications of manufacturing where large batches of products are being fabricated, and may limit the diversity and complexity of products capable of being manufactured.

Another form of additive manufacturing is binder jetting additive manufacturing ("BJAM"). During this process, a binding agent, such as glue, is deposited in a layer of powder, binding the powder at pre-determined and specific points, forming a solid material at those points. Similar to PBAM, above, a new layer of powder is then swept over the previous layer and the process is repeated until completion and de-powdered. At this point in the process, BJAM and its completed product have similar advantages as that of PBAM over other forms of additive manufacturing, including larger batch quantities, reduced build time, and reduced scrap.

However, the same inefficiencies of PBAM are, when product batches become sufficiently large and complex, greatly exacerbated in BJAM. The finished product of BJAM is usually in a brittle state, having high porosity and weak mechanical properties, and requiring a post-processing treatment, such as sintering or infiltration. These post-processing treatments require the finished product to be transported and handled by an operator or machine while in that weakened, brittle state.

Moreover, post-processing treatments usually require the binding agent to be burned out (leaving a porous product) before allowing the remaining material to bond together, as in sintering, or infiltrating the now porous product with an alternative material, such as bronze. During that state of temporarily increased porosity, the product is at an even greater risk of damage, and may require a specific orientation or suspension to avoid damage during post-process treatment. As such, structural support for the finished products is an even more critical consideration in the BJAM process.

Therefore, there is a need for a support frame that reduces the difficulty and time required in processing large batches of products.
Document EP 2 022 622 teaches a support frame comprising struts and at least one spring runner connecting a strut to the product.
Document US 2012/018926 teaches a support frame comprising struts and at least one runner connecting a strut to the product, said runner being removed before post-processing treatments.
Document WO 2018/151720 teaches a support frame comprising struts distant from the product for loosely supporting the product.

### BRIEF SUMMARY OF THE INVENTION

Several different support frames, as well as methods of utilizing same, are disclosed herein. The support frames permit a multitude of products, such as orthopedic implants, to be formed and/or coated at a single given time through a binder jetting or powder bed fusion process.

The appended claims define a system for supporting an object and a method of forming a structure according to the invention.

### BRIEF DESCRIPTION OF THE DRAWINGS

These and other features, aspects, and advantages of the present invention will become better understood with regard to the following description, and accompanying drawings.
FIG. 1 is a perspective view of a support frame, not according to the invention.
FIG. 2A is a side view of a support frame with a plurality of spring runners not according to the invention.
FIG. 2B is a partial view of the tip of one of the runners of FIG. 2A.
FIG. 3 is a side view of a support batch comprising a plurality of support frames supported by various types of runners not according to the invention.
FIG. 4 is a side view of a support frame with a plurality of fixture points not according to the invention.
FIG. 5 is a top view of the support frame of FIG. 3.
FIG. 6 is a side view of an embodiment of the present invention.
FIG. 7 is a top view of a support batch comprising a plurality of support frames in a 2D plane.
FIG. 8 is a side view of a support frame comprising a part negative.

### DETAILED DESCRIPTION

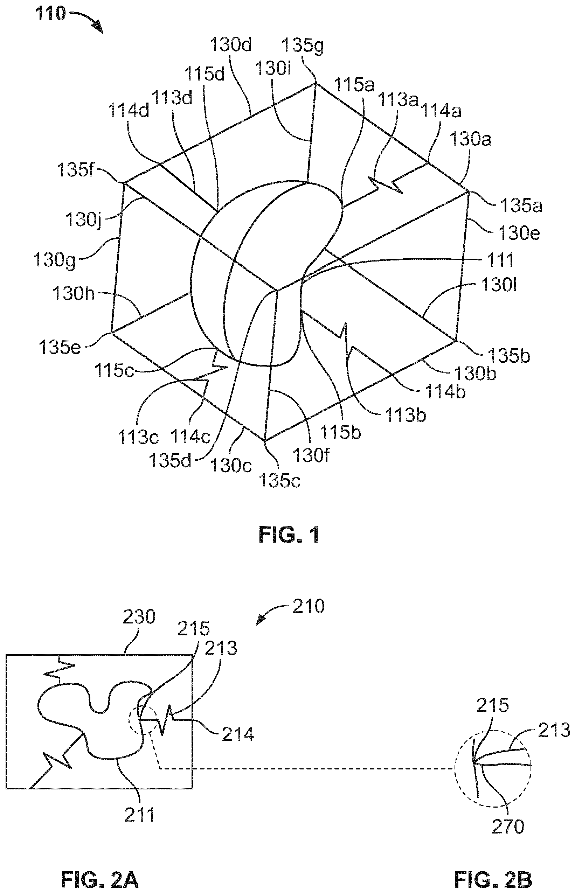

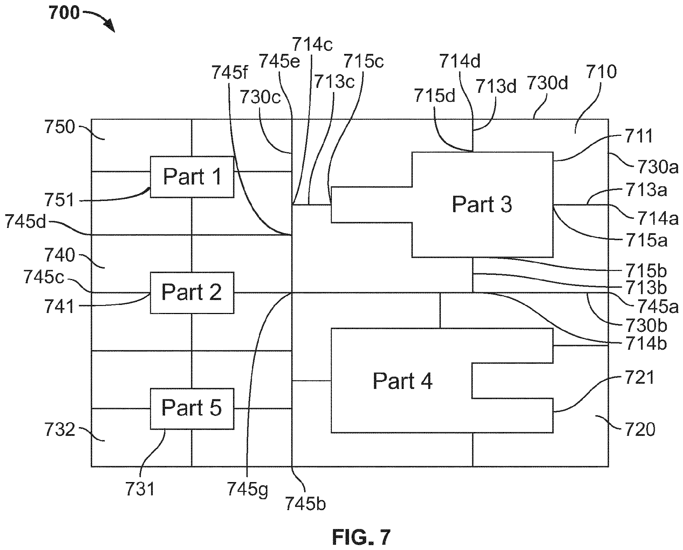

FIG. 1 depicts a support frame 110 supporting an object 111 through a series of runners 113 a-d interconnected with struts 130 a-d. Object 111 may be a product or products awaiting post-processing treatment (e.g., sintering, heat treatment, machining, or the like) or a plurality of parts requiring assembly for a product (*e.g.,* cube, shelf, part negative, or the like). Support frame 110 is configured to provide sufficient support for holding object 111 by at least partially surrounding object 111 after the PBAM process has finished and the support from the powder bed (not shown) has been removed. In this manner, support frame 110 can be treated as a single body rather than multiple unconnected parts, allowing for larger batch quantities to be produced while reducing the risk of damage from unconnected parts contacting each other during the de-powdering process and when being handled by an operator for post processing. Further, support frame 110 may maintain object 111 in a preferred orientation, for instance in a manner ideal for post-processing treatments. For instance, support frame 110 may support object 111 suspended in a 3D space, as shown in FIG. 1, or in a 2D plane, as shown in FIG. 7, as discussed below.

Struts 130 a-l are configured to form a geometric shape capable of maintaining its structural integrity while supporting object 111 during transport and post-processing treatment. Although FIG. 1 shows struts 130 a-l configured in a rectangular shape, struts 130 a-l can be made in any geometric shape. For instance, in other embodiments, struts 130a-l can be configured in the form of a scaffold, lattice, or some other 2D or 3D matrix known to one skilled in the art. In the embodiment shown in FIG. 1, struts 130 a-l are straight bars connecting with each other at each end to form strut connections 135 a-g. In other embodiments, struts 130 can be other shapes and lengths. For instance, in other embodiments, struts 130 may be straight, curved, angled, or any combination of the above. While struts 130 may be made of the same material as object 111-as struts 130 and object 111 are usually manufactured from the same powder bed-other embodiments may have struts 130 fabricated out of different material.

Runners 113 a-d are integrally connected with the object 111 at object contact points 115 a-d and with struts 130 a-d at strut contact points 114 a-d. Strut contact points 114 a-d are chosen to provide maximal support and even distribution of force along the support frame 110 when holding object 111 while maintaining the structural integrity of support frame 110. In other embodiments, strut contact points 114 may be placed at any point along the length of struts 130. Object contact points 115 a-d are chosen to provide sufficient support for object 111 during suspension while the tips of runners 113 a-d may be fabricated such that object contact points 115 a-d can be broken with minimal force and decreased risk of damage to object 111. In this manner, an operator may remove object 111 from support frame 110 by applying sufficient torsion, shearing, or pulling force on object contact points 115 a-d such that object 111 may be detached from runners 113 a-d while runners 113 a-d remain connected to struts 130 a-d at strut contact points 114a-d. Runners 113 a-d can be straight, as seen in runner 113 d, or spring-like, as seen in runners 113a-c. Spring runners will be discussed in more detail in FIGS. 2A-B below.

Although FIG. 1 shows four strut contact points 114 a-d and four object contact points 115 a-d, there can be more or less depending on the desired orientation and support for object 111. For instance, a plurality of strut contact points 114 may be created to stabilize a large or fragile object 111.

Support frame 110 may be formed, at least in part, in a layer-by-layer fashion using an additive layer manufacturing (ALM), i.e. 3D printing, such as PBAM, which uses a high energy beam, such as a laser beam or an electron beam, to solidify or bind materials together. Such ALM processes preferably may be powder-bed based processes including selective laser sintering (SLS), selective laser melting (SLM), and electron beam melting (EBM), as disclosed in U.S. Patent Nos. 7,537,664, 8,728,387, 9,135,374, 9,180,010 and 9,456,901, U.S. Prov. Pat. App. No. 62/517,456 and 62/520,221, and U.S. Pat. App. No. 15/982,704, 15/277,744, 14/276,483 and 14/969,695, or other ALM processes such as BJAM, stereolithography, multi-jet fusion, or powder-fed based processes including fused filament fabrication (FFF), e.g., fused deposition modeling (FDM). Preferably, support frame 110 is formed at the same time, utilizing the same process as object 111.

In FIG. 2A, support frame 210 including object 211 and struts 230 is provided, as described above. Support frame 210 includes spring runners 213. Spring runners 213 are similar to runners 113 of FIG. 1, except spring runners 213 have a non-linear shape, e.g., a curved, coiled, flat, clocked, or angled shape. Spring runners 213 are designed to hold object 211 in place while allowing for shrinkage during sintering or heat treatment as certain materials will experience deformation during those processes. This is especially important as shrinkage of a straight runner, as seen in runner 113 of FIG. 1, can reduce the support provided to the manufactured object. In this manner, the amount of support provided by spring runners 213 to object 211 remains the same before and after post-processing treatment. Spring runners 213 may have any number of coils as deemed necessary, including having no coils and having only a curved or angled shape.

FIG. 2B depicts a partial view of spring runner 213 being tapered starting from point 270 to object contact point 215. In this manner, the operator may detach object 211 with minimal force and risk of damage while still providing sufficient support for object 211 during transportation or post-process treatment.

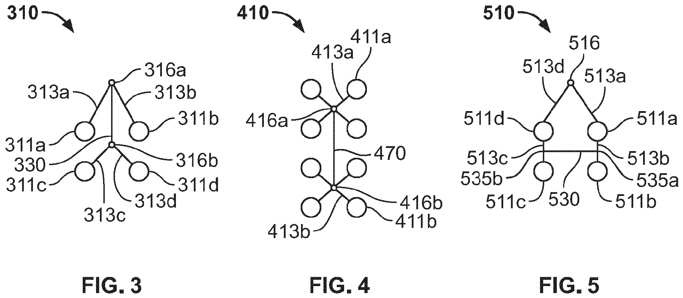

In FIG. 3, support frame 310 includes objects 311 a-d, strut 330, runners 313 a-d, and fixture points 316 a, b. In this embodiment, support frame 310 includes fixture point 316 a connected to runners 313 a, b supporting objects 311 a, b and fixture point 316 b connected to runners 313 c, d supporting objects 311 c, d. An operator may grab onto one or multiple of fixture points 316 a, b when handling the support frame 310. FIGS. 4 and 5, below, depict other embodiments of a support frame including fixture points.

FIG. 4 depicts a top view of a support frame 410 comprising fixture point 416 a connected to runners 413 a supporting objects 411 a. Fixture point 416 b, runners 413 b, and objects 411 b mirrors fixture point 416 a, runners 413 a and object 413 a about point 470. In this manner, weight may be equally distributed between fixture points 416 a and 416 b to allow for greater control and support when handling support frame 410.

FIG. 5 depicts a side view of a support frame 510 comprising fixture point 516 connected to runners 513 a, d supporting objects 511 a, d. Objects 511 a, d are connected to objects 511 b, c by runners 513 b, c. Strut 530 connects to runners 513 b, c by strut connections 535 a, b. In this manner, strut 530 provides additional support for support frame 510 during transport and handling. The single fixture point 516 allows for increased ease of use by the operator or robot.

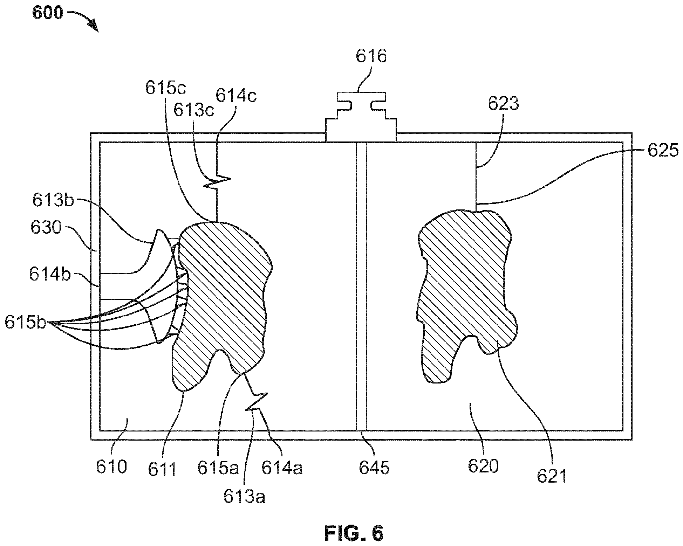

In FIG. 6, support batch 600 including support frames 610 and 620 supporting objects 611 and 621, respectively, are provided. In this embodiment, support frames 610 and 620 form support batch 600 through fixture point 616 and frame connection 645. Support frame 610 provides support for object 611 through spring runners 613 a, c and pronged runner 613 b. Pronged runner 613b connects to strut 330 by strut contact point 614 b while supporting the object with a plurality of object contact points 615 b. In this manner, the stress placed on contact points 615 a, c are more evenly distributed, allowing for greater support of object 611. Pronged runner 613 b is not limited to only one strut contact point 614 and, in other embodiments, may have any number of strut contact points 614 a, b, c and object contact points 615 a, b, c. Support frame 620 provides support for object 621 through runner 623. Where the object is sufficiently light, only one runner 623 may be required, thus reducing the material and cost required during manufacture. Although FIG. 6 shows support batch 600 having two support frames 610 and 620, any number of support frames may be provided, as shown in FIG. 7, below.

Fixture point 616 connects support frames 610 and 620 while providing a secure location for an operator to grab. For instance, fixture point 616 may be manufactured in a shape that is capable of carrying the weight of support batch 600 and ergonomically designed to be grasped, such as in the form of a handle or another structure designed to be grasped by a robot or the like. Additionally, fixture point 616 may be manufactured in a location designed to most equally distribute the stress of support batch 600 when being lifted. In this manner, fixture point 616 may allow an operator to transport and handle support batch 600 with increased ease and greater security. For instance, rather than de-powdering a product by handling it directly-thus increasing the risk of damage to the product-de-powdering a product may alternatively be performed by having an operator lift support batch 600 by fixture point 616 and removing the powder using vacuum or pressurized air. In this manner, the risk to damage to the product may be minimized.

In FIG. 7, support batch 700 includes a plurality of support frames 710, 720, 732, 740, 750 connected to each other by strut connections 745 a-g. In this embodiment, the support frames 710, 720, 732, 740, 750 are arranged in a 2D plane, each providing support for a corresponding object 711, 721, 731, 741, 751, respectively. For instance, support frame 710 provides support to object 711 through runners 713 a-d being connected to struts 730 a-d. Runners 713 a-d are connected to object 711 and struts 730 a-d through object contact points 715 a-d on a first end and to struts 730 a-d through strut contact points 714 a-d on a second end, respectively. Although not shown, support batch 700 may be one layer in a multi-layer stack of support batches comprising any number of layers. Further, support batch 700 may include any number of support frames, oriented in many different manners with respect to each other.

Objects 711, 721, 731, 741, 751 may include both a part of a product and a support for that part. For instance, both a part of a product and a negative of that part, as described below, may be detached from support batch 700 to simplify the post-process treatment and assist in the protection of that part during treatment.

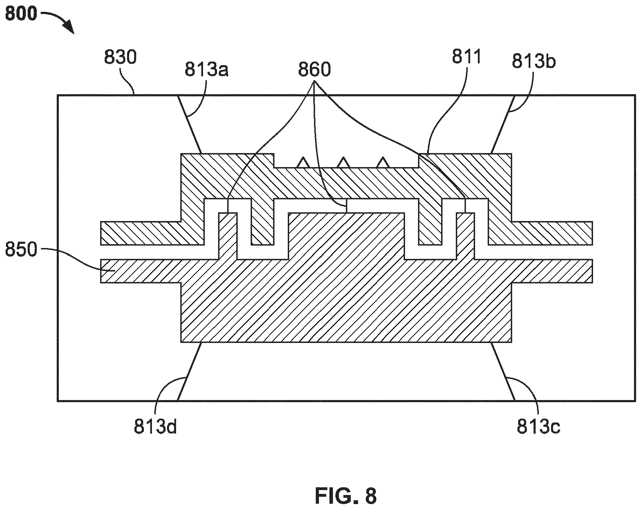

In FIG. 8, support frame 800 including object 811, struts 830, and runners 813 a-d is provided, as described above. In this embodiment, support frame 800 includes part negative 850. Part negative 850 is connected to object 811 through connectors 860, and to struts 830 through runners 813 c-d. Part negative 850 has a shape that is the opposite of object 811 such that, upon removal of connectors 860, object 811 would precisely fit on top of part negative 850. In this manner, part negative 850 may support object 811 by minimizing sagging or deformation to object 811 during post-processing. Moreover, during post-processing, connectors 860 may either remain attached to object 811 and part negative 850, or removed from support frame 800. Although FIG. 8 shows three connectors 860, in other embodiments, there may be any number of connectors. Additionally, although FIG. 8 shows where connectors 860 is straight, connectors may take any shape, e.g., a curved, coiled, or angled shape.

In another embodiment, the negative does not have any connectors and is instead coated with a sintering inhibitor that has a higher melting point than the material of the negative (e.g. ceramic paint where the negative is a metal, or an alternative material). In this manner, the object would be allowed to sag onto the negative during prost-processing, allowing for the surface of the object to have a smoother finish.

In another embodiment, the negative is separately manufactured and attached to the support frame for each post-processing cycle. The separately attached negative may be made by a reusable material (e.g. solid ceramic, or the like) or a single use material (e.g. printed ceramic, or the like).

In addition to that described above and illustrated in the figures, various other operations will now be described. It should be understood that the following operations do not have to be performed in the exact order described below. Instead, various steps may be handled in a different order or simultaneously. Steps may also be omitted or added unless otherwise stated therein.

In an embodiment of use, support frame 100 in FIG. 1 may be utilized to support object 111 during transportation and post-processing. Support frame 100 may be manufactured by PBAM, BJAM, or some other method of additive manufacturing known to one skilled in the art. Once manufacturing has finished, the powder (not shown) surrounding support frame 100 may be removed by, for instance, pressurized air or vacuuming the area surrounding support frame 100 until no or minimal powder remains.

Support frame 110 is then transported to a different station for further processing. An operator, robot, or the like may grasp onto supports 130 a-l and/or strut connections 135 to transport support frame 110. Once the operator has arrived at a desired location with support frame 110, object 111 may be removed from support frame 110 by applying a torsion, shearing, or pulling force on object contact points 115 a-d such that object 111 is detached from runners 113 a-d while runners 113 a-d remain connected to struts 130a-d at strut contact points 114 a-d.

In another method of use of support frame 110, object 111 may require further post-processing treatment after the de-powdering process. In this embodiment, object 111 is not detached from support frame 110 after transportation. Rather, object 111 remains in a preferred orientation within support frame 110 and undergoes post-processing treatment, such as sintering, heat treatment, or machining. Once the post-processing treatment has been completed, object 111 may be detached from support frame 110, as described above.

In another method of use, support batch 600 in FIG. 6 may be utilized to support objects 611 and 621 with support frames 610 and 620, respectively, during transportation and post-processing. Support batch 600 may be manufactured and de-powdered, as described above. In this embodiment, an operator, such as a robot or the like, may transport support batch 600 by grasping onto fixture point 616. Once support batch 600 has arrived at a desired location, objects 611 and 621 may be detached, or undergo post-processing treatment, as described above.

In the case of the use of a robot, fixture point 616 may be fabricated at a pre-determined and consistent location so that the robot may be programmed to grasp onto fixture point 616 and transport support batch 600 to a location for post-process treatment. After treatment has been finished, the robot transports support batch 600 by grasping onto fixture point 616, to a final processing location. The robot then detaches objects 611 and 621 by applying a pre-calculated amount of force on object contact points 615 a-c and 625. The robot may then return to its starting location and repeat the process again. In this manner, the entire post-processing treatment may be completed with minimal or no human operators.

It is to be understood that any of the embodiments described above and illustrated in the figures, may be constructed of various different materials. For instance, it is contemplated to utilize metals, such as titanium, or polymers, such as PEEK. Support frames and support batches may be fabricated from other various materials as well. For instance, using PBAM, the powder bed may be metal powders such as stainless steels, titanium alloy, nickel-based alloys (*e.g*., inconel), cobalt chromium, aluminum alloy, or the like. The laser used to solidify or bind the materials in PBAM may be an electron beam, a fiber-optic laser beam, a thermal print head, or the like. It is also contemplated to form different portions of the objects and support frames from different materials. For example, it is contemplated to form the latter from softer material that can easily be broken away from the former.

With BJAM, the powder bed may be metal powders such as stainless steel, aluminum alloy, nickel alloys or iron alloys, ceramics such as silica sand or ceramic beads, polymers such as acrylonitrile butadiene styrene, polyamide or polycarbonate, or the like. BJAM binding agents may be, for instance, PM-B-SR-1-04 for binding metals, or any binding agent known to one skilled in the art.

Support frames manufactured in a 3D space, as shown in FIG. 1, may be a part of a support frame matrix (not shown) having a plurality of support frames 110 adjacent to, and stacked on top of, each other. Additionally, support frames and support batches manufactured in a 2D plane, as shown in FIG. 7, may be one or more layers in a multi-layer stack (not shown) having a plurality of layers of support batches 700 stacked on top of each other. In this manner, production capabilities may be maximized in a 3D space or 2D plane.

Struts, as shown in FIG. 1, may provide clamping points (not shown). In this manner, the clamping points may provide a visual marker on struts 130 a-1 indicating where support frame 110 may optimally be clamped to increase stability for post-process treatments that may involve destabilizing forces, such as machining. Additionally, struts, as shown in FIG. 1, may include reference locations (not shown). In this manner, the reference locations may allow an operator to make accurate measurements of struts 130 a-1.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the scope of the present invention as defined by the appended claims.

## Claims

1. A system for supporting an object created by additive manufacturing comprising:
the object (611); and
a frame (610) forming a shape at least partially surrounding the object having:
at least one strut (630);
a spring runner (613a, 613c) having a first and second end, the first end integrally connected to the at least one strut (630) and the second end removably attached to the object (611), the spring runner being deformable upon being heated and having a first state, before being deformed and providing a first amount of support to the object, and a second state, after being deformed and providing a second amount of support to the object, the first amount of support being the same as the second amount of support; and
a pronged runner (613b) connecting to the strut (630) by a strut contact point (614) and to the object (611) by a plurality of object contact points (615).

2. The system of claim 1, wherein the at least one strut (630) has a form of any one, or any combination, of straight, curved, or angled struts.

3. The system of any one of claims 1 to 2, wherein the spring runner (613a, 613c) further comprises a first circumference and a second circumference, the first and second circumferences being different.

4. The system of any one of claims 1 to 3, wherein the spring runner (613a, 613c) has a form of any one, or any combination, of a curved, coiled, flat, clocked, or angled runner.

5. The system of any one of claims 1 to 4, further comprising a fixture (616) located on a portion of the frame (610) and configured to be interacted with by an operator.

6. A method of forming a structure comprising the steps of:
placing a layer of powder on a substrate;
partially fusing a location on the layer of powder to create a fused structure and an unfused structure along the layer of powder;
repeating the placing and fusing steps to create, from the fused structure, an object (611) and a frame (610) at least partially surrounding and attached to the object by a spring runner (613a, 613c) deformable upon being heated and having a first state, the spring runner providing a first amount of support to the object, the frame being also attached to the object by a pronged runner (613b) connecting to the strut (630) by a strut contact point (614) and to the object (611) by a plurality of object contact points (615);
processing the frame such that the spring runner deforms from the first state to a second state providing a second amount of support to the object, the first amount of support being the same as the second amount of support; and
removing the object from the frame.

7. The method of claim 6, further comprising infusing the object (111, 211, 311, 411, 511, 611, 621, 711, 721, 731, 741, 751, 811) with a material.

## Patentansprüche

1. System zum Stützen eines Objekts, das durch additive Fertigung hergestellt wird, das Folgendes umfasst:
das Objekt (611); und
einen Rahmen (610), der eine Form bildet, die das Objekt mindestens teilweise umgibt, und Folgendes aufweist:
mindestens eine Strebe (630);
eine Federschiene (613a, 613c) mit einem ersten und einem zweiten Ende, wobei das erste Ende integral mit der mindestens einen Strebe (630) verbunden ist und das zweite Ende entfernbar am Objekt (611) befestigt ist, wobei die Federschiene nach Erwärmen verformbar ist und einen ersten Zustand, bevor sie verformt wird, der dem Objekt ein erstes Maß der Stützung bereitstellt, und einen zweiten Zustand, nachdem sie verformt wurde, der dem Objekt ein zweites Maß der Stützung bereitstellt, aufweist, wobei das erste Maß der Stützung dasselbe ist wie das zweite Maß der Stützung; und
eine gezackte Schiene (613b), die über einen Strebenkontaktpunkt (614) mit der Strebe (630) und über eine Vielzahl von Objektkontaktpunkten (615) mit dem Objekt (611) verbunden ist.

2. System nach Anspruch 1, wobei die mindestens eine Strebe (630) als eine gerade, eine gekrümmte oder eine abgewinkelte Strebe oder eine Kombination davon ausgeformt ist.

3. System nach einem der Ansprüche 1 bis 2, wobei die Federschiene (613a, 613c) ferner einen ersten Umfang und einen zweiten Umfang umfasst, wobei sich der erste vom zweiten Umfang unterscheidet.

4. System nach einem der Ansprüche 1 bis 3, wobei die Federschiene (613a, 613c) als eine gekrümmte, eine gewendelte, eine flache, eine gestanzte oder eine abgewinkelte Schiene oder eine Kombination davon ausgeformt ist.

5. System nach einem der Ansprüche 1 bis 4, das ferner eine Vorrichtung (616) umfasst, die sich an einem Abschnitt des Rahmens (610) befindet und für eine Interaktion mit einem Bediener ausgelegt ist.

6. Verfahren zum Bilden einer Struktur, das die folgenden Schritte umfasst:
Platzieren einer Pulverschicht auf einem Substrat;
teilweises Verschmelzen eines Ortes auf der Pulverschicht, um entlang der Pulverschicht eine verschmolzene Struktur und eine nicht verschmolzene Struktur herzuerstellen;
Wiederholen der Schritte des Platzierens und des Verschmelzens, um aus der verschmolzenen Struktur ein Objekt (611) und einen Rahmen (610), der das Objekt teilweise umgibt und mittels einer Federschiene (613a, 613c), die nach Erwärmen verformbar ist und einen ersten Zustand aufweist, an demselben befestigt ist, wobei die Federschiene dem Objekt ein erstes Maß der Stützung bereitstellt, wobei der Rahmen außerdem mittels einer gezackten Schiene (613b), die über einen Strebenkontaktpunkt (614) mit der Strebe (630) und über eine Vielzahl von Objektkontaktpunkten (615) mit dem Objekt (611) verbunden ist, am Objekt befestigt ist;
Verarbeiten des Rahmens derart, dass sich die Federschiene aus dem ersten Zustand in einen zweiten Zustand verformt, der dem Objekt ein zweites Maß der Stützung bereitstellt, wobei das erste Maß der Stützung dasselbe ist wie das zweite Maß der Stützung; und
Entfernen des Objekts aus dem Rahmen.

7. Verfahren nach Anspruch 6, das ferner das Infundieren des Objekts (111, 211, 311, 411, 511, 611, 621, 711, 721, 731, 741, 751, 811) mit einem Material umfasst.

## Revendications

1. Système pour supporter un objet créé par fabrication additive, comprenant :
l'objet (611) ; et
un bâti (610) formant une forme entourant au moins partiellement l'objet, ayant :
au moins une entretoise (630) ;
un longeron à ressort (613a, 613c) ayant des première et deuxième extrémités, la première extrémité étant solidairement connectée à l'au moins une entretoise (630) et la deuxième extrémité étant attachée de façon détachable à l'objet (611), le longeron à ressort étant déformable après avoir été chauffé et ayant un premier état avant d'avoir été déformé et offrant une première quantité de support à l'objet, et un deuxième état après avoir été déformé et offrant une deuxième quantité de support à l'objet, la première quantité de support étant identique à la deuxième quantité de support ; et
un longeron à ergots (613b) connecté à l'entretoise (630) par un point de contact avec l'entretoise (614) et à l'objet (611) par une pluralité de points de contact avec l'objet (615).

2. Système selon la revendication 1, dans lequel l'au moins une entretoise (630) a une forme quelconque parmi les entretoises droites, incurvées, et coudées, ainsi que l'une quelconque de leurs combinaisons.

3. Système selon l'une quelconque des revendications 1 et 2, dans lequel le longeron à ressort (613a, 613c) comprend en outre une première circonférence et une deuxième circonférence, les première et deuxième circonférences étant différentes.

4. Système selon l'une quelconque des revendications 1 à 3, dans lequel le longeron à ressort (613a, 613c) a une forme quelconque parmi les longerons incurvés, enroulés, plats, synchronisés, et coudés, ainsi que l'une quelconque de leurs combinaisons.

5. Système selon l'une quelconque des revendications 1 à 4, comprenant en outre une fixation (616) située sur une partie du bâti (610) et configurée pour qu'un opérateur interagisse avec elle.

6. Procédé de formation d'une structure, comprenant les étapes de :
placement d'une couche de poudre sur un substrat ;
fusion partielle d'un emplacement sur la couche de poudre pour créer une structure fondue et une structure non fondue le long de la couche de poudre ;
répétition des étapes de placement et de fusion pour créer, à partir de la structure fondue, un objet (611) et un bâti (610) entourant au moins partiellement et attaché à l'objet par un longeron à ressort (613a, 613c) déformable après avoir été chauffé et ayant un premier état, le longeron à ressort offrant une première quantité de support à l'objet, le bâti étant aussi attaché à l'objet par un longeron à ergots (613b) se connectant à l'entretoise (630) par un point de contact avec l'entretoise (614) et à l'objet (611) par une pluralité de points de contact avec l'objet (615) ;
traitement du bâti de façon que le longeron à ressort se déforme du premier état à un deuxième état offrant une deuxième quantité de support à l'objet, la première quantité de support étant identique à la deuxième quantité de support ; et
retirer l'objet hors du bâti.

7. Procédé selon la revendication 6, comprenant en outre l'imprégnation de l'objet (111, 211, 311, 411, 511, 611, 621, 711, 721, 731, 741, 751, 811) avec un matériau.
